# EUROPÄISCHE PATENTANMELDUNG

(11) **EP 0 627 865 A2**
(43) Veröffentlichungstag der Anmeldung: **07.12.1994**
(21) Anmeldenummer: 94106532.8
(22) Anmeldetag: 27.04.1994
(51) Int. Cl.: H04Q 11/04, H04M 11/06

(54) **Verfahren und Schaltungsanordnung zur Reservierung von Zeitschlitzen bei serieller Datenübertragung**

(30) Priorität: 05.05.1993 DE 4314790
(71) Anmelder: Alcatel SEL Aktiengesellschaft, D-70435 Stuttgart (DE)
(72) Erfinder: Foth, Egmont, D-70839 Gerlingen (DE)
(74) Vertreter: Müller, Joachim

(57) **Zusammenfassung**

Zur Realisierung unterschiedlicher Schnittstellenbedingungen im ISDN-Teilnehmeranschlußbereich beziehungsweise in ISDN-Teilnehmerendgeräten werden spezielle integrierte Schaltkreise, sog. Telecom-ICs, eingesetzt. Um bei gleichzeitigem Reservierungswunsch mindestens zweier Baugruppen dieser Telecom-ICs konkurrierende Bussituationen zu vermeiden, werden zur Steuerung und Sicherung der Informationsübertragung Controller benötigt. Erfindungsgemäß wird ein Verfahren zur Reservierung von Zeitschlitzen mit einer einfachen Schaltungsanordnung angegeben. Ein Reservierungswunsch wird von einer Zeitschlitzreservierungseinheit (ZRE) signalisiert. Eine Kollisionserkennungseinheit (KEE) prüft, ob möglicherweise weitere Baugruppen auf den Bus zugreifen wollen und weist der Baugruppe mit der höchsten Priorität einen Zeitschlitz zu, falls ein Belegungszustandsspeicher (BZS) zuvor einen freien Zeitschlitz erkannt hat. Das Verfahren ist mit einer sehr kostengünstigen Schaltung allgemein bei serieller Datenübertragung und konkurrierenden Bussituationen einsetzbar.

## Beschreibung

Das Problem, bestimmte Zeitschlitze für die Datenübertragung zu reservieren, tritt immer dann auf, wenn mehrere Baugruppen oder mehrere Geräte an einen Bus angeschlossen sind und gleichzeitig zwecks Übertragung von Daten auf den Bus zugreifen wollen. Eine solche Konkurrenzsituation entsteht beispielsweise in ISDN-Endgeräten, die integrierte Schaltkreise für die S-Schnittstelle und die U-Schnittstelle enthalten. Um die integrierten Schaltkreise, kurz Telecom-ICs TIC, kostengünstig anbieten zu können, wurden von mehreren Herstellern Standards für die digitale Schnittstelle zwischen verschiedenen Telecom-ICs geschaffen. Häufig angewendet wird die sogenannte IOM-2-Schnittstelle, ISDM Oriented Modular-2-Schnittstelle, vgl. Firmenschrift Siemens: ICs for Communications, IOM-2 Interface Reference Guide, Stand 3.91. Um die allgemein bekannten Telecom-ICs auch einsetzen zu können, wenn konkurrierende IOM-2-Bus-Situationen auftreten, muß für die Steuerung und Sicherung der Informationsübertragung ein Controller vorgesehen werden. In der genannten Quelle wird zwar angegeben, daß die Controller-Funktion von den Telecom-ICs ausgeführt wird, jedoch wird die Lösung nicht beschrieben. Die Kosten der Telecom-ICs werden durch die Controller-Funktion erhöht.

Daraus resultiert die Aufgabe, eine einfache Schaltungslösung für einen Controller anzugeben, die kostengünstig realisierbar ist und mit der handelsübliche Telecom-ICs für konkurrierende IOM-2-Bus-Anwendungen ergänzt werden können.

Diese Aufgabe wird durch das im Anspruch 1 beschriebene Verfahren und durch die im Anspruch 2 beschriebene Schaltungsanordnung gelöst.

Mit logischen Grundschaltungen wird ein Controller realisiert, mit dem mikroprozessorgesteuerte Telecom-ICs bekannter Hersteller ergänzt werden können, um die fehlende Telecom-IC-Bus-Verwaltung zu übernehmen.

Die erfindungsgemäße Lösung wird nachstehend an einem Ausführungsbeispiel erläutert. In der dazugehörigen Zeichnung zeigen
- Fig. 1: ein Blockschaltbild der erfindungsgemäßen Schaltungsanordnung und
- Fig. 2: ein Zeitdiagramm dreier typischer Signalverläufe.

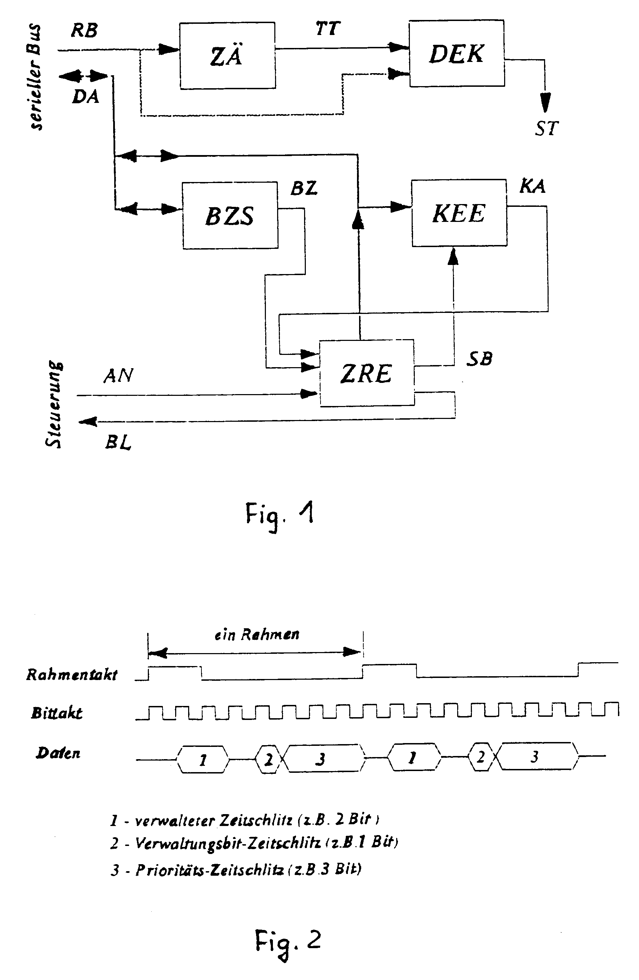

Gemäß Fig. 1 besteht die Schaltungsanordnung zur Durchführung des Verfahrens zur Reservierung von Zeitschlitzen aus einem Belegungszustandsspeicher BZS, einer Zeitschlitzreservierungseinheit ZRE, einer Kollisionserkennungseinheit KEE, sowie einem Zähler ZÄ und einem Dekoder DEK.

Zur Taktversorgung der Baugruppen wird der Zähler ZÄ von dem Rahmentakt und Bittakt, vgl. Fig. 2, angesteuert und liefert Teiltakte TT, mit denen von dem Dekoder DEK bedarfsweise jeder einzelne Zeitschlitz innerhalb eines Rahmens der seriell übertragenen Daten dekodiert werden kann. Damit werden zeitgerechte Steuertakte ST für den Belegungszustandsspeicher BZS, die Zeitschlitzreservierungseinheit ZRE und die Kollisionserkennungseinheit KEE erzeugt.

Mit dem Belegungszustandsspeicher BZS wird in jedem Rahmen der Pegel im Verwaltungsbit-Zeitschlitz, vgl. Fig. 2, gelesen und gespeichert, bis er im nächsten Rahmen aktualisiert wird. Beträgt der Pegel 0, dann gilt der durch dieses Bit verwaltete Zeitschlitz als belegt, bei dem Pegel 1 ist der verwaltete Zeitschlitz frei. Der jeweilige Zustand wird auf der Belegungszustandsleitung BZ der Zeitschlitzreservierungseinheit ZRE angezeigt.

Liegt von einer Baugruppe ein Reservierungswunsch vor, so wird dieser von einem Anforderungssignal mit dem Pegelwert 1 signalisiert. Ist der verwaltete Zeitschlitz frei, das heißt, die Belegungszustandsleitung BZ liegt auf 1, dann wird von der Zeitschlitzreservierungseinheit ZRE auf der Datenleitung DA im Prioritäts-Zeitschlitz eine festgelegte Prioritätsbitfolge gesendet, beispielsweise die Bitfolge 010. Dabei gilt die Bitfolge 000 als höchste und die Bitfolge 111 als niedrigste Priorität. Auf Grund von Open-Drain-Stufen und eines Pull-up-Widerstandes an der Datenleitung DA setzt sich bei gleichzeitigem Sendebeginn mehrerer erfindungsgemäßer Anordnungen stets der 0-Pegel durch.

Während von der Zeitschlitzreservierungseinheit ZRE erstmals die Prioritätsbitfolge ausgesendet wird, wird gleichzeitig von einem Sendebeginnsignal SB, dessen Dauer gleich der Prioritätszeitschlitzdauer ist, der Kollisionserkennungseinheit KEE signalisiert, daß von dieser geprüft werden muß, ob ein Reservierungswunsch von einer weiteren Baugruppe vorliegt. Dazu wird von der Kollisionserkennungseinheit KEE die eigene Prioritätsfolge, beispielsweise 101, mit der auf der Datenleitung DA lesbaren verglichen. Tritt eine Abweichung auf, dann wird von der Kollisionserkennungseinheit KEE auf der Kollisionsanzeigeleitung KA ein Löschimpuls zu der Zeitschlitzreservierungseinheit ZRE übertragen, und der Sendevorgang wird sofort beendet. In diesem Fall ist der verwaltete Zeitschlitz von einer anderen Baugruppe reserviert worden.

Wird von der Kollisionserkennungseinheit KEE Übereinstimmung der Prioritätsfolgen signalisiert, das heißt, es tritt keine Kollision auf, dann erfolgt im nächsten Rahmen zusätzlich die Aussendung eines 0-Pegels im Verwaltungsbit-Zeitschlitz von der Zeitschlitzreservierungseinheit ZRE. Damit wird weiteren Geräten angezeigt, daß der verwaltete Zeitschlitz nun reserviert ist. Tritt auch innerhalb dieses Rahmens keine Kollision im Prioritäts-Zeitschlitz auf, dann gilt die Reservierung als erfolgreich abgeschlossen und wird von der Zeitschlitzreservierungseinheit ZRE für die Baugruppe mit Reservierungswunsch mittels eines statischen Belegungssignals BL angezeigt. Diese Belegung wird durch den 1-Pegel des Anforderungssignals AN solange aufrechterhalten, bis sein Pegel Null wird. Mit dem Übergang auf den Null-Pegel ist die Reservierung beendet und die Baugruppe darf nicht mehr auf der Datenleitung DA senden. Die Zeitschlitzreservierungseinheit ZRE stellt ebenfalls das Senden ein.

Nach Aufhebung der Reservierung ist es zweckmäßig, erst nach zwei Rahmentakten einen erneuten Reservierungswunsch über das Anforderungssignal AN zuzulassen. Das bewirkt, daß auch niederpriorisierte Baugruppen den verwalteten Zeitschlitz belegen können, da erst nach dem Lesen des Zustandes im ersten Rahmen die Reservierung im zweiten Rahmen erfolgen kann.

Wenn einer Baugruppe die höchste Priorität mit der Bitfolge 000 zugeordnet wird, dann kann die Kollisionserkennungseinheit KEE entfallen, da schaltungstechnisch gesichert ist, daß sich der 0-Pegel immer durchsetzt.

Die Dauer des zu verwaltenden Zeitschlitzes kann beliebig groß sein, praktisch wird sie üblicherweise Vielfache von acht Bits betragen.

Das Verfahren ist auch dann anwendbar, wenn mehr als eine Datenleitung DA vorhanden ist.

## Patentansprüche

1. Verfahren zur Reservierung von Zeitschlitzen bei serieller Datenübertragung über einen Bus, an dem mindestens zwei Baugruppen und/oder Geräte angeschlossen sind, die gleichzeitig einen Sendewunsch haben können, **dadurch gekennzeichnet**, daß
- von einem Belegungszustandsspeicher (BZS) jeweils der aktuelle Wert von einem auf einer Datenleitung (DA) empfangenem Zeitschlitzverwaltungsbit gespeichert und damit am Ausgang des Belegungszustandsspeichers (BZS) auf der Belegungszustandsleitung (BZ) der Belegungszustand von zu dem Zeitschlitzverwaltungsbit korrespondierenden Zeitschlitzen in der seriellen Datenfolge signalisiert wird,
- von einer Zeitschlitzreservierungseinheit (ZRE) bei vorliegendem Sendewunsch, der durch ein aktives externes Anforderungssignal (AN) angezeigt wird, und bei auf der Belegungszustandsleitung (BZ) angezeigtem freien Zeitschlitz, die Reservierung des gewünschten Zeitschlitzes derart vorbereitet wird, daß einerseits zunächst der Zustand eines Verwaltungsbit-Zeitschlitzes abgetastet wird und bei unbelegtem Zustand im gleichen Zeitrahmen in einem Prioritäts-Zeitschlitz eine die Priorität festlegende Bitfolge auf der Datenleitung (DA) gesendet wird und im darauffolgenden Zeitrahmen die Aussendung des Verwaltungsbits und der Prioritätsbits erfolgt und daß andererseits am Ausgang der Zeitschlitzreservierungseinheit (ZRE) ein Sendebeginnsignal (SB) aktiviert wird,
- von einer Kollisionserkennungseinheit (KEE) bei anliegendem Sendebeginnsignal (SB) durch Überwachung der Datenleitung (DA) die die Priorität festlegende Bitfolge aller einen Sendewunsch signalisierenden Baugruppen ausgewertet wird und das Ergebnis über eine Kollisionsanzeigeleitung (KA) der Zeitschlitzreservierungseinheit (ZRE) übermittelt wird,
- von der Zeitschlitzreservierungseinheit (ZRE), die die höchste Priorität gesendet hat, die erfolgreiche Reservierung eines Zeitschlitzes für die Datenübertragung mittels eines statischen Belegungssignals (BL) angezeigt und von ihr solange aufrecht erhalten wird wie das Anforderungssignal (AN) aktiviert ist, während bei niederer Priorität sofort das Senden von Verwaltungsbit und Prioritätsbits eingestellt wird,
- zur Taktversorgung, von einem Zähler (ZÄ) aus dem Rahmen- und Bittakt (RB) der seriellen Datenfolge synchrone Teiltakte (TT) erzeugt werden, aus denen über einen Dekoder (DEK) Steuertakte (ST) für den Belegungszustandsspeicher (BZS), die Zeitschlitzreservierungseinheit (ZRE) und die Kollisionserkennungseinheit (KEE) abgeleitet werden.

2. Schaltungsanordnung zur Durchführung des Verfahrens nach Anspruch 1, dadurch gekennzeichnet, daß der Belegungszustandsspeicher (BZS), an dessen Eingang die Datenleitung (DA) liegt, mit einem ersten Eingang der Zeitschlitzreservierungseinheit (ZRE) verbunden ist, deren erste Ausgangsleitung ebenso wie die Datenleitung (DA) an die Kollisionserkennungseinheit (KEE) geschaltet sind, daß der Ausgang der Kollisionserkennungseinheit (KEE) an einem zweiten Eingang der Zeitschlitzreservierungseinheit (ZRE) liegt, deren zweite Ausgangsleitung das Belegungssignal (BL) führt und daß an einem dritten Eingang der Zeitschlitzreservierungseinheit (ZRE) das Anforderungssignal (AN) liegt.
